# EUROPEAN PATENT APPLICATION

(11) **EP 1 021 050 A1**
(43) Date of publication of application: **19.07.2000**
(21) Application number: 99300216.1
(22) Date of filing: 14.01.1999
(51) Int. Cl.: H04Q 1/14

(54) **Improvements in or relating to patch panels**

(71) Applicant: Thomas & Betts International, Inc., Sparks, Nevada 89431 (US)
(72) Inventor: Debal, Patrick A. J., 3212 Pellenberg (BE)
(74) Representative: Howick, Nicholas Keith

(57) **Abstract**

A patch panel (11) and cable management tray (12) are formed from a single sheet of material formed to provide a substantially planar front panel portion, a cable management tray (12) extending rearwardly of the front panel portion and securement arms (18) extending between the cable management tray (12) and the front panel portion (11) to reinforce the formed structure. The method of manufacture comprises the steps of taking a sheet of formable material, forming holes as desired, bending the sheet material to provide the front panel portion (11) and tray (12), bending the sheet material to provide the securement arms (18) and securing the free end of each arm (18) to the sheet material to provide the enforcement of the formed sheet structure.

## Description

The invention relates to patch panels.

It is known to provide a patch panel with a cable management tray extending behind it; patch panel connections result in many cables extending from the patch panel rear, and or cable management tray provides useful cable support and possibly a structure to assist in grouping of particular cables if desired. However, such combinations of a patch panel and cable management tray have been made hitherto by welding together a patch panel front and separately formed a cable management tray.

This invention seeks to overcome difficulties in manufacturing existing patch panel and cable management tray assemblies, and to provide benefits of costs, simplicity of manufacture and reliability in producing a patch panel and cable management tray.

According to the invention, there is provided a patch panel and a cable management tray extending therefrom, the patch panel and cable management tray being formed from a single sheet of material formed to provide a substantially planar front panel portion, a cable management tray extending rearwardly of the front panel portion and securement arms extending between the cable management tray and the front panel portion to reinforce the formed structure.

The cable management tray preferably extends from a lower edge of the front panel portion and comprises a base portion for lying horizontal, in use, behind and at the bottom of the front panel portion and a cable management support portion parallel to and spaced further from the front panel portion than the base portion.

A flange preferably extends rearwardly of an upper edge of the front panel portion and parallel to the base portion, end portions of the flange being bent normal to the planes of the flange and of the front panel portion to provide securement elements, the arms preferably comprising portions extending at either end of the cable management support portion and folded to lie in a plane normal to the planes of the front panel portion and of the cable management support portion, each arm being secured to the associated securement element, for example by welding.

The invention further provides a method of manufacturing a patch panel and cable support tray, comprising the steps of taking a sheet of formable material, forming such holes therein as are desired, bending the sheet material to provide a substantially planar front panel portion and a cable management tray extending rearwardly of the front panel portion, bending the sheet material to provide securement arms, and securing the free end of each arm to the sheet material to provide reinforcement of the formed sheet structure.

The arms preferably extend from the cable management tray and the method preferably includes a step of securing the arms to the front panel portion, preferably by spot welding.

The method preferably comprises a step of bending a flange extending rearwardly of an upper edge of the front panel portion, bending from the flange material a support portion at each end of the flange with the end portions lying normal both to the front panel portion and to the flange, each arm being secured to an associated support portion.

One embodiment of a patch panel and cable management tray, and its associated method of manufacture, according to the invention will now be described by way of example, with reference to the accompanying drawings, in which:-
Figure 1 is a rear perspective view of a patch panel and cable management tray according to the invention;
Figure 2 is an enlarged view of part of figure 1 showing additional detail of manufacturing steps;

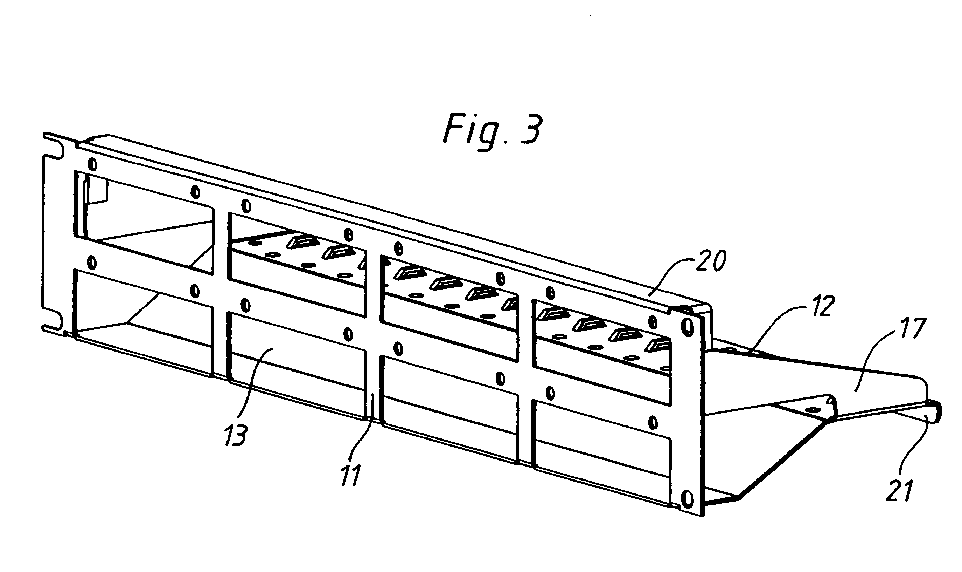

Figure 3 is a front perspective view of the patch panel and cable management tray of Figure 1; and
Figure 4 shows the bending profile of the sheet material.

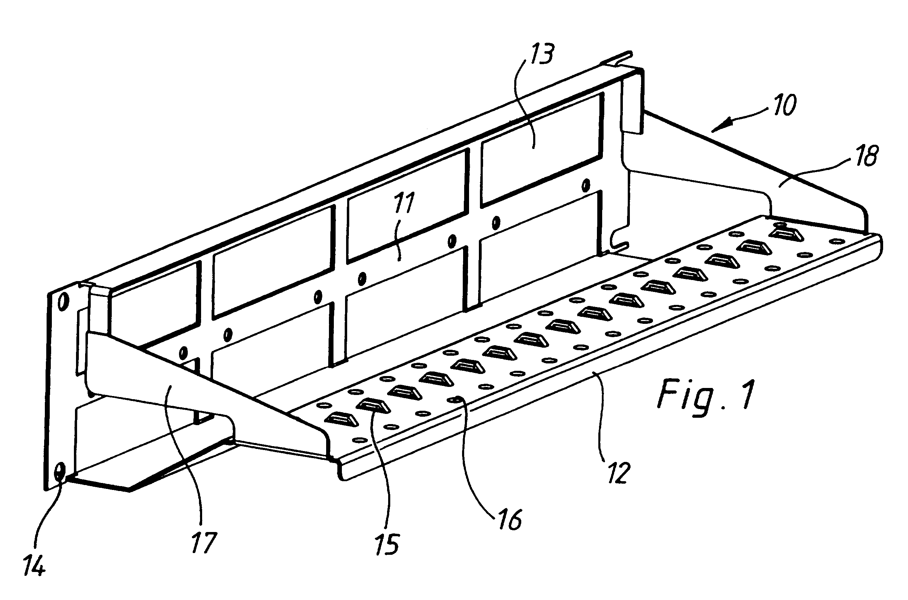

Figure 1 shows, generally indicated at 10, a one piece patch panel 11 and cable management tray 12 formed of a suitable formable sheet material such as sheet metal. Before forming, appropriate holes are formed in the patch panel 11, usually by stamping the sheet material, to provide rectangular holes 13 for supporting connectors and round holes 14 for passage of securement elements such as screws or bolts. The cable management tray is formed or pressed to provide cable alignment nodules 15 and holes 16 through which screws, bolts or other securement elements may pass.

The external shape required is also stamped from the sheet material, as are support arms 17, 18.

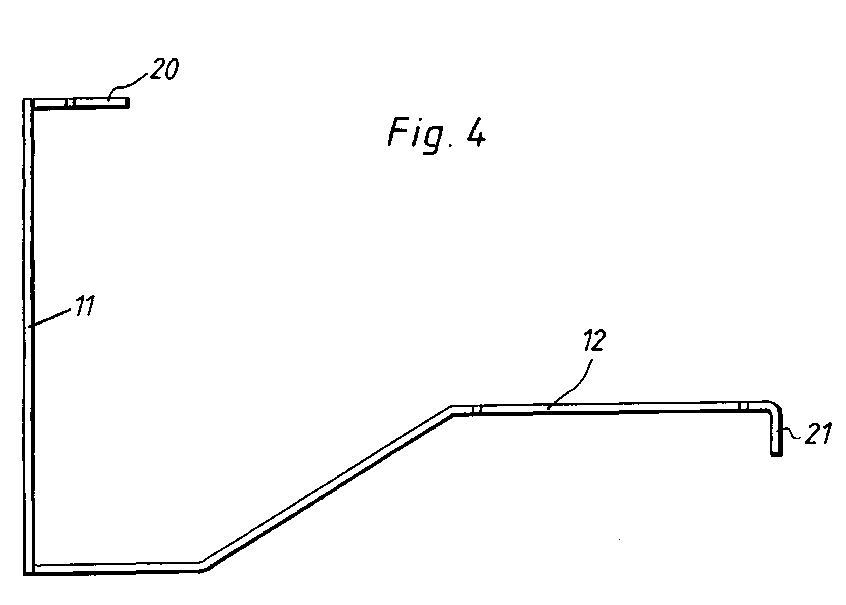

Once the external shape and internal openings and profiles have been formed, the sheet material is bent in accordance with a main bending profile as indicated in Figure 4. This shows the main elements of the patch panel 11 and cable management tray 12 as well as an upper flange 20 extending rearwardly of the patch panel and a rear rib 21 extending downwardly from the cable management tray to add rigidity to it.

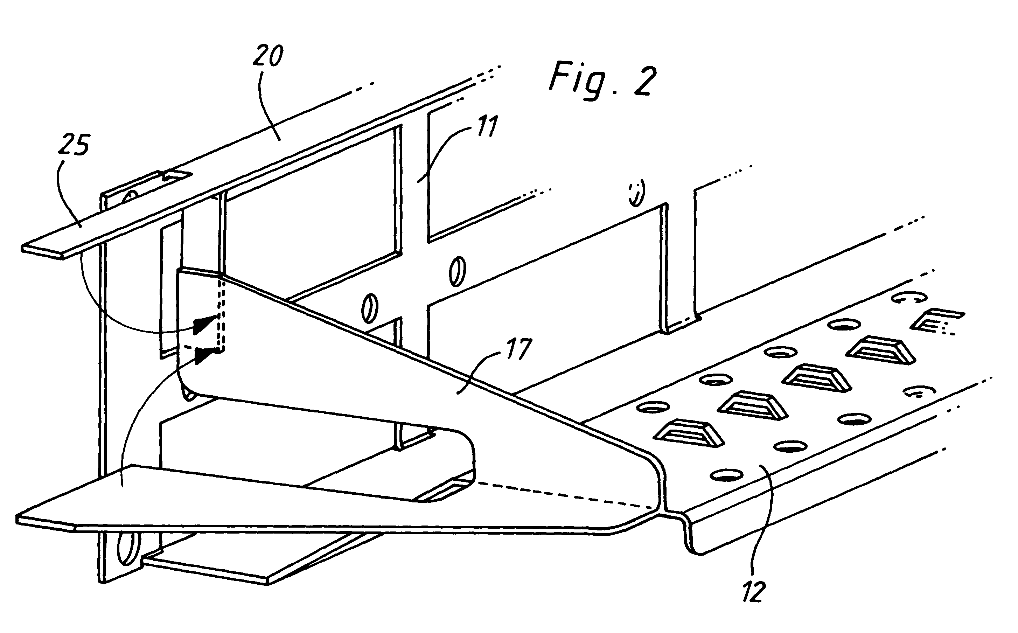

Figure 2 shows in more detail the arrangement of the securement arm 17 and how it is attached to the patch panel 11. When formed originally before the sheet material is bent, the securement arms 17 lie in the plane of the sheet material. After bending, the arms 17 still lie in the plane of the cable management tray 12 but are bent to lie perpendicular to the plane of the cable management tray 12.

A portion at each end of the flange 20 extends outwardly as a cantilever after the external profile of the material is formed and, as shown in Figure 2, end portion 25 is bent from the plane of the flange 20 to lie perpendicular both to the plane of the patch panel 11 and to the plane of the flange 20. In this way, the end securement portion 25 and the securement arm 17 lie against one another and can be secured, for example by spot welding or possibly bolting through the sheets if suitable holes are formed.

Formation of the patch panel and cable management tray assembly is thus a straight forward exercise from sheet material stamped and then bent with a straightforward spot weld to secure the structure. This is a significant advantage over prior art assembly both from the point of view of ease of manufacture, cost and also reliability and strength.

It will be appreciated that modifications may be made to this embodiment; the scope of the invention is defined in the appended claims.

## Claims

1. A patch panel and a cable management tray extending therefrom, the patch panel and cable management tray being formed from a single sheet of material formed to provide a substantially planar front panel portion, a cable management tray extending rearwardly of the front panel portion and securement arms extending between the cable management tray and the front panel portion to reinforce the formed structure.

2. A patch panel and cable management tray as claimed in claim 1 wherein the cable management tray extends from a lower edge of the front panel portion and comprises a base portion for lying horizontal, in use behind and at the bottom of the front panel portion and a cable management support portion parallel to and spaced further from the front panel portion than the base portion.

3. A patch panel and cable management tray as claimed in claim 2 comprising a flange extending rearwardly of an upper edge of the front panel portion and parallel to the base portion, end portions of the flange being bent normal to the planes of the flange and of the front panel portion to provide securement elements to which the arms are secured.

4. A patch panel and cable management tray as claimed in claim 3 when the arms comprise portions extending at either end of the cable management support portion and folded to lie in a plane normal to the planes of the front panel portion and of the cable management support portion, each arm being secured to the associated securement element.

5. A patch panel and cable management tray as claimed in claim 4 when the arms are secured to the associated securement elements by welding.

6. A method of manufacturing a patch panel and cable support tray, comprising the steps of taking a sheet of formable material, forming such holes therein as are desired, bending the sheet material to provide a substantially planar front panel portion and a cable management tray extending rearwardly of the front panel portion, bending the sheet material to provide securement arms, and securing the free end of each arm to the sheet material to provide reinforcement of the formed sheet structure.

7. A method as claimed in claim 6 including a step of securing the arms to the front panel portion by spot welding.

8. A method as claimed in claim 6 or claim 7 comprising a step of bending a flange extending rearwardly of an upper edge of the panel portion, bending from the flange material a support portion at each end of the flange with the end portions lying normal to both the front panel portion and to the flange, each arm being secured to an associated support portion.
